Europäisches Patentamt

European Patent Office

Office européen des brevets

(11) Publication number: **0 106 814**
**B1**

(12) # EUROPEAN PATENT SPECIFICATION

(45) Date of publication of patent specification: **07.12.88**

(51) Int. Cl.⁴: **A 23 G 9/12**

(21) Application number: **83830197.6**

(22) Date of filing: **07.10.83**

(54) **Household ice-cream machine.**

(30) Priority: **14.10.82 IT 5381482 u**
**30.12.82 IT 5414382 u**

(43) Date of publication of application:
**25.04.84 Bulletin 84/17**

(45) Publication of the grant of the patent:
**07.12.88 Bulletin 88/49**

(84) Designated Contracting States:
**AT BE CH DE FR GB LI LU NL SE**

(56) References cited:
**BE-A- 495 261**
**CH-A- 121 504**
**FR-A-1 023 909**
**FR-A-1 417 038**
**US-A-1 953 766**
**US-A-1 978 176**
**US-A-2 116 924**
**US-A-2 139 576**
**US-A-3 780 536**

(73) Proprietor: **BREVETTI GAGGIA S.p.A.**
**I-20087 Robecco sul Naviglio (IT)**

(72) Inventor: **Pandolfi, Alberto**
**Via San Giacomo 2**
**I-20142 Milano (IT)**

(74) Representative: **Klausner, Erich et al**
**c/o Ufficio Internazionale Brevetti Ing. C. Gregorj**
**S.p.A. Via Dogana 1**
**I-20123 Milano (IT)**

Courier Press, Leamington Spa, England.

## Description

The present invention relates to household ice-cream machines comprising a supporting structure, an annular container carried by the supporting structure with its axis extending vertically and adapted to hold a quantity of ice-cream ingredients, a blade within the container, a geared motor for rotating the blade within the container and a cooling system including a motor-compressor, a condenser and an evaporator coil, the evaporator coil being adjacent the outer surface and the bottom of the annular container.

In known ice-cream machines of the said type, such as the one disclosed in BE-A-495261, the container is fixed to the structure of the ice-cream machine and the evaporator is in direct contact with the wall of the container itself.

This solution makes the cleaning of the container difficult and this cleaning problem means that, among other things, it is not possible to make ice creams of different types in rapid succession as would, in certain cases, be desirable.

From FR-A-I.417.038 it is known a professional-type ice-cream maker, intended to be associated to a desk for the production of ice-creams to be sold to the public. In the machine disclosed in this document the cream container, having a much greater capacity than the containers for household ice-cream makers, is rotatably mounted within a support structure and is rotated during ice-cream production by a central vertical shaft sustaining the container and extending downwardly from an upper driving head supported by a vertical structure.

The container is releasable, but the extraction and lifting thereof involves — owing to the fact that such container is hung to the driving shaft — a complex sequence of operations, requiring the use of a rackwork, housed within the driving head, for lifting the stirrer shaft, of a device for disconnecting the container shaft from the driving head, and of hinge means for swinging outwardly the upright strut carrying the driving head.

The above mentioned known professional-type machine is evidently not suitable for domestic use and, in any case, it does not allow production in rapid succession of ice-creams of different flavours, each in a small amount corresponding to the domestic demand.

In order to avoid this disadvantage, the present invention provides an ice-cream machine for household use, of the type defined at the beginning, the main characteristic of which is such as defined in the characterizing part of Claim I.

This characteristic greatly facilitates cleaning by virtue of the possibility of removing the annular container from the ice-cream machine. The annular container, of small bulk and weight, may in fact easily be rinsed and washed like an ordinary cooking utensil.

The unique combination of features characterizing the machine of the invention thus effectively leads to the solution of the problem of making ice-creams of different types in rapid succession in an household motor-driven ice-cream machine having a compressor-condenser evaporator cooling system.

Moreover the evaporator is not immersed in the low-freezing-point liquid, which further simplifies the periodic cleaning of the annular container. With this solution it is also possible to reduce the capacity of the interspace and hence the volume of low-freezing-point liquid with the advantage, on the one hand, of an appreciable improvement in the delivery of the cooling system and on the other hand of making the removal of the annular container from and its reinsertion in the ice-cream machine easier and more convenient.

Moreover, the evaporator coil, even when the annular container is removed, is protected and screened by the annular vessel and is invisible from the exterior, with obvious additional advantages from an aesthetic point of view.

The invention will now be described in detail with reference to the appended drawings, provided purely by way of non-limiting example, in which:

Figure 1 is a partially sectioned schematic view of a household ice-cream machine according, to the invention,

Figure 2 illustrates a detail of Figure 1, and

Figure 3 is a plan view of Figure 1 from above.

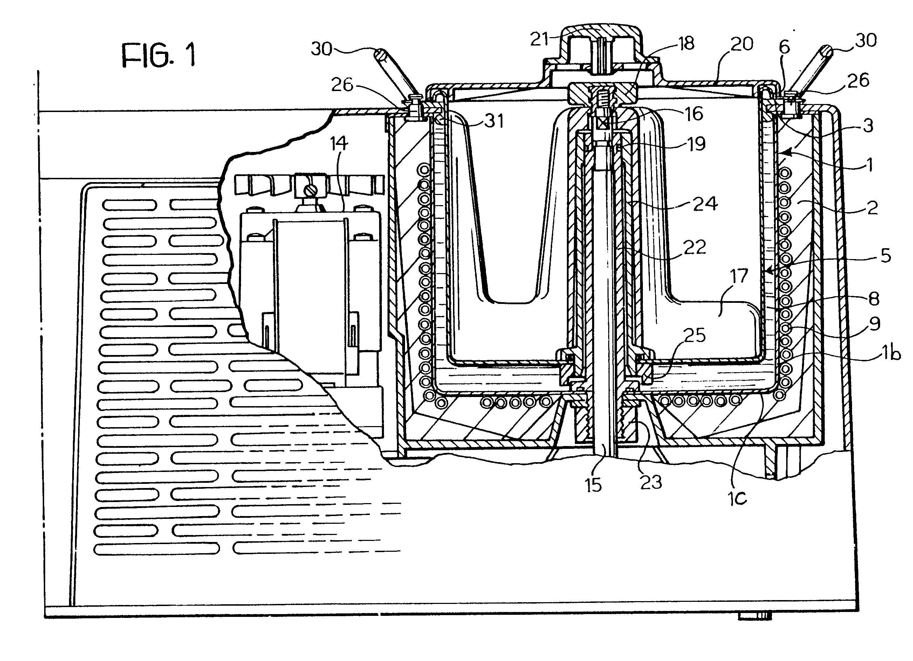

Referring initially to Figure 1, an annular vessel 1 is fixed to the support structure of a household ice cream machine and has external thermal insulation indicated 2.

The outer edge of the vessel 1 has an annular flange 3 bent horizontally outwardly.

An annular container 5 is located within the vessel 1 and has an annular flange 6 around its outer edge, bent outwardly and resting on the flange 3 of the vessel 1. The container 5 is releasably secured to the vessel 1, as it will be explained in detail hereinafter.

The container 5 has smaller dimensions than those of the vessel 1 whereby there is an interspace 8 between the outer walls and the bottom of the vessel containing a liquid with a low freezing point, for example a saline solution (brine).

Reference 9 indicates an evaporator coil forming part of a cooling system including a motor driven compressor and a condenser, not shown in the drawing.

The function of the low-freezing-point liquid in the interspace 8 is to ensure good cold transmission from the evaporator 9 to the container 5 without direct metal contact between the two parts.

A geared motor unit is indicated 14, which rotates a shaft 15 through a clutch (not visible), the shaft extending vertically through the central cavity of the vessel 1 and carrying a sealing washer 19. As is seen, in the drawing, the shaft 15 is surrounded by the inner side wall of the vessel 1 which is formed by a tubular casing 22 fitted onto the shaft 15 and locked to the bottom, of the vessel 1 by means of a ring nut 23. Similarly, the inner wall of the annular container 5 is formed by a tubular casing 24 which surrounds the casing 22 and is locked to the base wall of the container 5 by a ring nut 25.

To the free end of the shaft 15 there is keyed, by a prismatic coupling 16, a blade 17 housed in the usual manner in the container 5. The end of the shaft 15 is threaded and a manually-operable nut 18 is screwed on to it so as to lock the blade 17 axially on the shaft 15.

Reference 20 indicates a removable lid for closing the container, the lid having a central hand-grip 21 for its handling.

The outer side wall Ib and the base wall Ic of the annular vessel 1 are of a material with a high thermal conductivity, normally copper, and the evaporator coil 9 is welded to the outer surface of the walls Ib and Ic. Consequently the evaporator 9 is not immersed in the low-freezing-point liquid in the interspace 8, which further simplifies the periodic cleaning of the container 5. The evaporator 9 is thus effectively protected by the vessel 1 even when the annular container 5 is removed and there is the added advantage that the dimensions of the interspace 8, and consequently the volume of the low-freezing-point liquid, can be reduced.

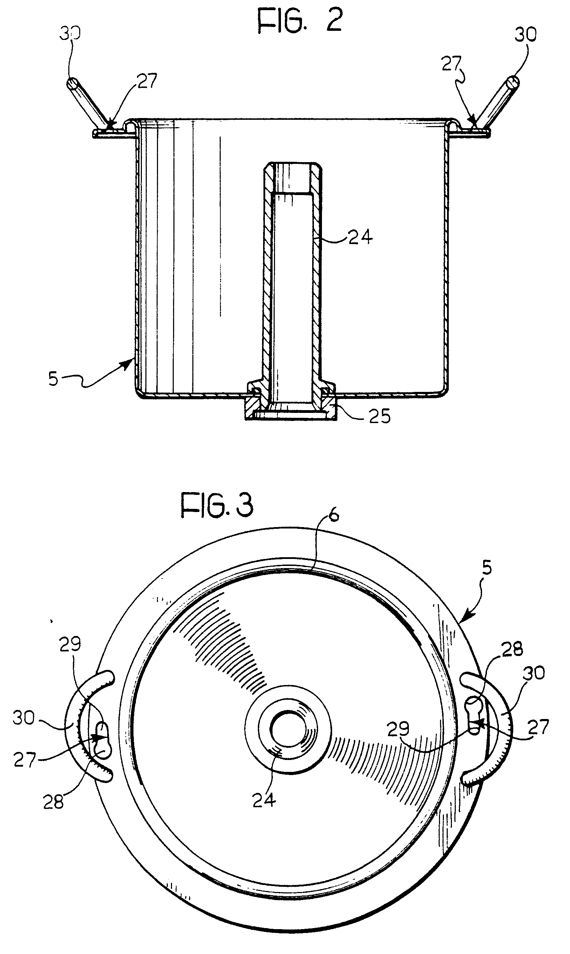

The releasable connection between the container 5 and the vessel 1 is achieved by means of a pair of grooved pins 26 welded to the annular flange 3 of the vessel 1 and projecting vertically upwardly to engage corresponding elongate apertures 27 formed in the annular flange 6 of the container 5. As is clearly illustrated in Figure 3, each aperture 27 has an initial enlarged part 28 arranged to allow passage of the respective pin 26 and a narrow terminal part 29 for engagement of the groove in the pin 26 on rotation of the container 5.

In order to facilitate the removal and re-insertion of the container 5, two handles 30 are fixed to the annular flange 6.

In order to achieve effective hermetic closure of the interspace 8 when the annular container is inserted, an annular washer 31 of resiliently yielding material is located between the annular flange 6 and the outer edge of the vessel I.

It will be clear from the above that, after operation of the ice-cream machine, the annular container 5 may rapidly be removed to allow rinsing and cleaning.

## Claims

1. Household ice-cream machine, comprising a supporting structure, an annular container (5) carried by the supporting structure with its axis extending vertically and adapted to hold a quantity of ice-cream ingredients, a blade (17) within the container, a geared motor (14) for rotating the blade (17) within the container and a cooling system including a motor-compressor (19), a condenser (11) and an evaporator coil (9), the evaporator coil being adjacent the outer surface and the bottom of the annular container, characterized by the following features in combination:

the annular container (5) is releasably supported. by the supporting structure of the machine,

the upper edge of the releasable annular container (5) has an annular horizontal flange (6) resting on the said supporting structure and coupled thereto through releasable retaining means (26) adapted to prevent rotation of the annular container (5),

the said support structure comprises an annular vessel (1) of a high thermal-conductivity material defining an interspace (8) between its inner wall and the said releasable annular container (5), and a thermal insulation (2) surrounding the said annular vessel (1),

the evaporator coil (9) is fixed to the outer wall of the annular vessel (1),

the interspace (8) comprised between the annular vessel (1) and the releasable annular container (5) is filled with a low-freezing-point liquid,

the blade (17) is removably mounted on a vertical rotatable shaft (15) extending into the central cavity of the annular vessel (1) and the lower end of which is driven by the geared motor (15), whereby the annular container (5) is easily removable from the annular vessel (1) by simply releasing the said blade (17) and the said retaining means (4, 26).

2. Ice-cream machine according to Claim 1, characterized in that the said annular flange (6) of the container (5) rests on a corresponding annular flange (3) of the upper edge of the annular vessel (1), and in that the said removable retaining means are grooved pins (26) secured to the annular flange (3) of the annular vessel (1) and engaging corresponding apertures (27) having enlarged ends (28) in the annular flange (6) of the releasable container (5); sealing means (31) being interposed between the flange (6) of the releasable container (5) and the corresponding edge of the annular vessel (1).

3. Ice-cream machine according to Claim 1, characterized in that sealing means (19) are interposed between the upper end of the shaft (17) carrying the blade (15) and the inner wall of the annular container (5).

## Patentansprüche

1. Haushalts Speiseeismaschine, mit einer Tragkonstruktion, einem Von der Tragkonstruktion mit sich senkrecht erstreckender Achse gehaltenen ringförmigen Behälter (5) zur Aufnahme von Speiseeisbestandteilen, einem im Behälter angeordneten Rührblatt (17), einem Getriebemotor (14) zur Drehung des Rührblattes (17) innerhalb des Behälters, und einem Kühlsystem mit einem Motor-Kompressor (19), einem Kondensator (11) und einer an der äußeren Oberfläche und am Boden des ringförmigen Behälters angeordneten Verdampferschlange (9),

gekennzeichnet durch die Kombination folgender Merkmale:

der ringförmige Behälter (5) ist von der Tragkonstruktion der Maschine lösbar gehalten,

der obere Rand des lösbaren ringförmigen Behälters (5) hat einen ringförmigen Horizontalflansch (6), der sich auf der Tragkonstruktion abstützt und an dieser über lösbare Befestigungselemente (26) zur Verhinderung einer Drehung des ringförmigen Behälters (5) befestigt ist,

die Tragkonstruktion umfaßt einen ringförmigen Kessel (1) aus Material mit hoher Wärmeleitfähigkeit, welcher zwischen seiner Innenwand und dem lösbaren ringförmigen Behälter (5) einen Zwischenraum (8) definiert und welcher von einer Thermoisolierung (2) umgeben ist,

die Verdampferschlange (9) ist an der Außenwand des ringförmigen Kessels (1) befestigt,

der Zwischenraum (8) zwischen dem ringförmigen Kessel (1) und dem lösbaren ringförmigen Behälter (5) ist mit einer Flüssigkeit mit niedrigem Gefrierpunkt gefüllt,

das Rührblatt (17) ist lösbar auf einem senkrechten, drehbaren Schaft (15) angeordnet, der sich in die Zentralausnehmung des ringförmigen Kessels (1) erstreckt und dessen unteres Ende vom Getriebemotor (15) angetrieben ist, wodurch der ringförmige Behälter (5) einfach durch Lösen des Rührblattes (17) und der Befestigungselemente (4, 26) leicht vom ringförmigen Kessel (1) entfernbar ist.

2. Speiseeismaschine nach Anspruch 1, dadurch gekennzeichnet, daß der ringförmige Flansch (6) des Behälters (5) auf einem zugehörigen Ringflansch (3) des oberen Randes des ringförmigen Kessels (1) aufliegt, und daß die lösbaren Befestigungselemente von Kerbstiften (26) gebildet sind, welche am Ringflansch (3) des ringförmigen Kessels (1) angebracht sind und mit zugehörigen Öffnungen (27) mit vergrößerten Enden (28) im ringförmigen Flansch (6) des lösbaren Behälters (5) in Eingriff stehen, wobei zwischen dem Flansch (6) des lösbaren Behälters (5) und dem zugehörigen Rand des ringförmigen Kessels (1) Dichtmittel (31) angeordnet sind.

3. Speiseeismaschine nach Anspruch 1, dadurch gekennzeichnet, daß zwischen dem oberen Ende des das Rührblatt (15) tragenden Schaftes (17) und der Innenwand des ringförmigen Behälters (5) Dichtmittel (19) angeordnet sind.

**Revendications**

1. Machine destinée à la fabrication ménagère de crèmes glacées comportant une structure porteuse, une cuve annulaire (5) qui est portée par la structure porteuse de façon que son axe s'étende verticalement et qui est agencée de manière à contenir une certaine quantité d'ingrédients de la crème glacée, une palette (17) placée à l'intérieur de la cuve, un moteur (14) pour faire tourner la palette (17) dans la cuve et un dispositif de réfrigération comprenant un motocompresseur, un condenseur et un serpentin d'évaporation (9), le serpentin d'évaporation étant placé au voisinage de la surface extérieure et du fond de la cuve annulaire, caractérisée par les caractéristiques suivantes prises en combinaison:

la cuve annulaire (5) est portée de façon démontable par la structure porteuse de la machine,

le bord supérieur de la cuve annulaire (5) démontable est muni d'un rebord annulaire horizontal (6) qui repose sur ladite structure porteuse et y est relié par des moyens de fixation démontables (26) agencés de manière à empêcher la rotation de la cuve annulaire (5),

ladite structure porteuse comprend un récipient annulaire (1) qui est fait d'un matériau à conductivité thermique élevée et qui définit un intervalle (8) entre sa paroi intérieure et ladite cuve annulaire démontable (5) et une isolation thermique (2) qui entoure ledit récipient annulaire (1),

le serpentin d'évaporation (9) est fixé à la paroi extérieure du récipient annulaire (1),

l'intervalle (8) compris entre le récipient annulaire (1) et la cuve annulaire démontable (5) est rempli d'un liquide à bas point de congélation,

la palette (17) est montée de façon amovible sur un arbre rotatif vertical (15) qui s'étend dans la cavité centrale du récipient annulaire (1) et dont l'extrémité inférieure est entraînée par le moteur (14), ce qui permet de retirer facilement la cuve annulaire (5) du récipient annulaire (1) en libérant simplement ladite palette (17) et lesdits moyens de fixation (26).

2. Machine à fabriquer des crèmes glacées selon la revendication 1, caractérisée en ce que ledit rebord annulaire (6) de la cuve (5) repose sur un rebord annulaire (3) correspondant du bord supérieur du récipient annulaire (1) et en ce que lesdits moyens de fixation démontables sont des goupilles à encoche (26) qui sont fixées sur le rebord annulaire (3) du récipient annulaire (1) et qui viennent en prise avec des ouvertures correspondantes (27), lesquelles comportent des extrémités élargies (28) dans le rebord annulaire (6) de la cuve démontable (5); des moyens d'étanchéité (31) étant interposés entre le rebord (6) de la cuve démontable (5) et le bord correspondant du récipient annulaire (1).

3. Machine à fabriquer des crèmes glacées selon la revendication 1, caractérisée en ce que des moyens d'étanchéité (19) sont interposés entre la paroi intérieure de la cuve annulaire (5) et l'extrémité supérieure de l'arbre (15) qui porte la palette (17).

FIG. 1

# FIG. 2

# FIG.3